# EUROPEAN PATENT APPLICATION

(11) **EP 3 442 067 A2**
(43) Date of publication of application: **13.02.2019**
(21) Application number: 17779292.6
(22) Date of filing: 23.03.2017
(51) Int. Cl.: H01M 10/04, H01M 10/0587, H01M 2/16, H01M 2/14

(54) **ELECTRODE ASSEMBLY AND METHODS FOR MANUFACTURING ELECTRODE ASSEMBLY AND BATTERY**

(30) Priority: 07.04.2016 KR 20160043084
(71) Applicant: Jenax Inc., Busan 47301 (KR)
(72) Inventor: SHIN, Lee Hyun, Busan 47301 (KR); KIM, Chang Hyeon, Gongju-si Chungcheongnam-do 32621 (KR)
(74) Representative: Wallinger Ricker Schlotter Tostmann
(86) International application number: PCT/KR2017/003140
(87) International publication number: WO 2017/175992

(57) **Abstract**

The present invention relates to an electrode assembly, a battery including the electrode assembly, and a method of manufacturing the same. A method of manufacturing an electrode assembly according to an embodiment of the present invention includes: a step for providing a separator; a step for forming a first conductive network layer comprising at least more than one first metal fibers on a first peripheral surface of the separator; and a step for providing a first particle composition comprising the electrically active material of the first polarity in the pores of the first conductive network layer.

## Description

### BACKGROUND OF THE INVENTION

### 1. Field

The present invention relates to a battery technology, and more particularly, to an electrode assembly and a method of manufacturing a battery and an electrode assembly.

### 2. Description of the Related Art

Recently, the battery industry has been actively and intensively studied and explored as the industry of portable electronic devices is expanding remarkably due to the recent development of semiconductor manufacturing technology and communication technology, and the development of alternative energy is increasing rapidly due to environmental preservation and depletion of resources. As a typical battery, a lithium primary battery has been widely applied in terms of miniaturization and light weight because it has a higher voltage and a higher energy density than a conventional aqueous-based battery.

Such a lithium primary battery is mainly used as a main power source or backup power source for portable electronic devices. The secondary battery is a battery which can be charged and discharged by using an electrode material having excellent reversibility. Such a secondary battery mainly uses a lithium-based oxide as a positive electrode active material and a carbonaceous material as a negative electrode active material. Generally, it is classified as a liquid electrolyte cell and a polymer electrolyte cell, depending on the type of electrolyte, a battery using a liquid electrolyte is referred to as a lithium ion battery, and a battery using a polymer electrolyte is referred to as a lithium polymer battery. The lithium secondary battery is now being manufactured in various shapes. Typical shapes may include a cylindrical shape, a square shape, and a pouch shape. Further, the lithium secondary battery is classified into a nickel-hydrogen (Ni-MH) battery, a lithium battery, and a lithium ion battery depending on the anode and cathode materials. Bit by bit, the application fields of the secondary battery is being expanded to a wide range from small batteries such as mobile phones, notebook-type PCs, and mobile displays to batteries for electrically vehicles and medium- and large-sized batteries for hybrid vehicles. Accordingly, a demand that the battery should have high stability and economics as well as a light weight, a high energy density, an excellent charging/discharging speed, a charging/discharging efficiency and a cycle characteristic has been required more eagerly and earnestly. For this purpose, efforts have been made to ensure stable low-resistance contact between the active material and the active material and between the active material and the current collector. In general, there is a conventional approach wherein a conductive material having high electrical conductivity such as carbon or graphene particles is mixed with the active material, and the mixed material is applied. However, in case of this conventional approach, it is difficult to meet new demands for batteries such as excellent charging/discharging rate, capacity, efficiency and life span and flexibility or pliability.

### SUMMARY OF THE INVENTION

It is an object of the present invention to provide a method of manufacturing the electrode assembly wherein change of a shape may be easily made, a manufacturing process is very simple, and excellent energy density is provided without deteriorating battery performance, and an electrode assembly manufactured according to the method thereof.

Furthermore, another technological problem to be solved by the present invention is to provide a method of manufacturing a battery having the advantages described above and capable of easily manufacturing the same.

According to one embodiment of the present invention in order to solve the above problems, there is provided a method of manufacturing an electrode assembly, comprising: providing a separator; forming a first conductive network layer comprising at least more than one first metal fibers on a first peripheral surface of the separator; and providing a first particle composition comprising electrically active materials of the first polarity into the pores of the first conductive network layer.

The separator may include at least any one selected from a polyethylene film, a polypropylene film, or a film-type separator in which pores are formed in a composite structure thereof, a ceramic coated separator in which ceramic particles are coated on the separator, and a fiber type separator having nonwoven fabric or woven structure by using polymer fibers. The fiber type separator may contain at least any one selected from polyethylene fiber, polypropylene fiber, polyethylene terephthalate fiber, cellulose fiber, Kevlar fiber, nylon fiber and polyphenylene sulfide fiber. The diameter of the polymer fibers may be 1 nm or more and 100 m or less. The separator may have the thickness between 10µm or more and 100µm or less, and the porosity may be 30% or more and 95% or less.

On a surface of the first conductive network layer opposite to the surface in contact with the first peripheral surface , an exposed surface may be formed for bonding with the adjacent layer. The first particle composition is provided only into the inner side of the first conductive network layer so that an end of a segment or a portion of the segment for forming the first metal fibers may be exposed on the exposed surface.

Forming a second conductive network layer comprising at least more than one second metal fibers on a second peripheral surface opposite to the first peripheral surface of the separator may be further included. Providing a second particle composition into the pores of the second conductive network layer may be further included, and the second particle composition includes electrically active materials of a second polarity opposite to the first polarity.

The first conductive network layer may be formed by providing the separator into a solvent in which the first metal fibers are dispersed. The first conductive network layer may be formed by providing the separator into the air in which the first metal fibers are dispersed.

A step for compressing the first conductive network layer provided with the first particle composition, and the separator may be further included.

According to another embodiment of the present invention in order to solve the above problems, there is provided a method of manufacturing an electrode assembly, comprising: forming a first conductive network layer including at least more than one first metal fibers; stacking the first conductive network layer on a first peripheral surface of the separator; providing a first particle composition comprising pores of electrically active materials of the first polarity into the pores of the first conductive network layer.

On a surface of the first conductive network layer opposite to the surface in contact with the first peripheral surface , an exposed surface may be formed for bonding with the adjacent layer. The first particle composition is provided only into the inner side of the first conductive network layer so that an end of a segment or a portion of the segment for forming the first metal fibers may be exposed on the exposed surface.

Stacking a second conductive network layer comprising at least more than one second metal fibers on a second peripheral surface opposite to the first peripheral surface of the separator may be further included. Providing a second particle composition into the pores of the second conductive network layer may be further included, and the second particle composition includes electrically active materials of a second polarity opposite to the first polarity.

If the carding method is employed, the first conductive network layer including a fiber layer in which the first metal fibers are randomly arranged may be formed. The fiber layer may be laminated on the separator by at least any one selected from a melting process through a heat treatment and an adhesion process using an adhesive. The fiber layer may further include a binder of a fiber type in addition to the first metal fibers. The fiber type binder may include at least any one selected from the group consisting of polyethylene(PE), polypropylene(PP), polyethylene terephthalate(PET), polypropylene terephthalate(PPT), nylon, polyethylene naphthalate(PEN), polyether sulfone(PES), polyether ether ketone(PEEK), polyphenylene sulfide(PPS), polyvinylidene fluoride(PVDF), and copolymers thereof, or mixtures thereof.

According to one embodiment of the present invention in order to solve the above problems, there is provided an electrode assembly, comprising: a separator; a first conductive network layer comprising at least more than one first metal fibers on a first peripheral surface of the separator; and electrically active materials of the first polarity impregnated into the pores of the first conductive network layer.

The separator may include at least any one selected from a polyethylene film, a polypropylene film, or a film-type separator in which pores are formed in a composite structure thereof, a ceramic coated separator in which ceramic particles are coated on the separator, and a fiber type separator having nonwoven fabric or woven structure by using polymer fibers. The fiber type separator may contain at least any one selected from polyethylene fiber, polypropylene fiber, polyethylene terephthalate fiber, cellulose fiber, Kevlar fiber, nylon fiber and polyphenylene sulfide fiber. The diameter of the polymer fibers may be 1 nm or more and 100 m or less. The separator may have the thickness between 10µm or more and 100µm or less, and the porosity may be 30% or more and 95% or less.

On a surface of the first conductive network layer opposite to the surface in contact with the first peripheral surface, an exposed surface may be formed for bonding with the adjacent layer. The first particle composition is provided only into the inner side of the first conductive network layer so that an end of a segment or a portion of the segment for forming the first metal fibers may be exposed on the exposed surface.

A second conductive network layer comprising at least more than one second metal fibers formed on a second peripheral surface opposite to the first peripheral surface of the separator may be further included. A second particle composition comprising electrically active materials of a second polarity opposite to the first polarity in the pores of the second conductive network layer may be further included.

The first conductive network layer may further include a binder of a fiber type in addition to the first metal fibers. The binder of a fiber type may include at least any one selected from the group consisting of polyethylene(PE), polypropylene(PP), polyethylene terephthalate(PET), polypropylene terephthalate(PPT), nylon, polyethylene naphthalate(PEN), polyether sulfone(PES), polyether ether ketone(PEEK), polyphenylene sulfide(PPS), polyvinylidene fluoride(PVDF), and copolymers thereof, or mixtures thereof.

In order to solve the above-mentioned problems, according to another embodiment of the present invention, there is provided a method of manufacturing a battery comprising, forming a first conductive network layer comprising at least more than one or more first metal fibers on the first peripheral surface of a first separator having the first peripheral surface and a second peripheral surface opposite to the first peripheral surface, and a first electrode assembly impregnated with a first particle composition comprising electrically active materials of a first polarity in pores of first conductive network layer; forming a second conductive network layer comprising at least one second metal fibers on the third peripheral surface of the second separator having a third peripheral surface and a fourth peripheral surface opposite to the third peripheral surface, and providing a second electrode assembly in which a second particle composition comprising electrically active materials of a second polarity opposite to the first polarity is impregnated in pores of the second conductive network layer; and coupling the first electrode assembly and the second electrode assembly, so that the second peripheral surface of the first separator and the third peripheral surface of the second separator may face each other.

A third conductive network layer may be formed on the second peripheral surface of the first separator, and the third conductive network layer including at least more than one third metal fiber. The fiber density of the third metal fibers formed on the second peripheral surface of the first separator may be smaller than the fiber density of the second metal fibers formed on the third peripheral surface of the second separator. And a fourth conductive network layer including at least more than one fourth metal fibers on the fourth peripheral surface of the second separator may be formed.

Coupling at least more than one electrode assembly having the same structure as that of the first electrode assembly or the second electrode assembly to a surface opposite to a surface to which the first electrode assembly and the second electrode assembly are coupled may be further included.

Winding the first electrode assembly and the second electrode assembly which coupled to each other may be further included.

According to the embodiment of the present invention, the electrode assembly may be manufactured without forming a metal foil used as a current collector of an electrode by forming a conductive network layer composed of the metal fibers on the separator constituting the electrode assembly. Therefore, the manufacturing process may be simplified and the energy density may also be increased.

Further, according to the embodiment of the present invention, since the electrically active material and the conductive network are substantially uniformly mixed in the entire volume of the electrode structure due to the fibrous characteristic of the electrode assembly, even when a user wants to increase the thickness in order to control the capacity of the battery, the volume may be variously selected without deterioration of battery performance.

In addition, according to the embodiment of the present invention, a three-dimensional battery may be manufactured by a method such as stacking, bending and winding because a process for forming a fibrous electrode structure may be easily executed. In addition to the cylindrical shape, the batteries of a square shape and a pouch shape, or various batteries integrated into a textile product may be easily manufactured.

### BRIEF DESCRIPTION OF THE DRAWINGS

FIG. 1A is a reference view for explaining a method of manufacturing an electrode assembly according to an embodiment of the present invention.
FIG. 1B is a reference view for explaining a method of manufacturing an electrode assembly according to another embodiment of the present invention.
FIG. 1C is a flowchart illustrating a method of manufacturing an electrode assembly according to an embodiment of the present invention.
FIG. 1D is an enlarged reference view of a portion of an electrode assembly according to an embodiment of the present invention.
FIG. 2A is a reference view for explaining a method of manufacturing an electrode assembly according to still another embodiment of the present invention.
FIG. 2B is a reference view for explaining a method of manufacturing an electrode assembly according to still another embodiment of the present invention.
FIG. 2C is a flowchart illustrating a method of manufacturing an electrode assembly according to still another embodiment of the present invention.
FIG. 3A is a reference view for explaining a method of manufacturing an electrode assembly according to an embodiment of the present invention.
FIG. 3B is a reference view for explaining a method of manufacturing an electrode assembly according to another embodiment of the present invention.
FIG. 3C is a reference view for explaining a method of manufacturing an electrode assembly according to a still another embodiment of the present invention.
FIG. 3D is a reference view for explaining a method of manufacturing an electrode assembly according to a still another embodiment of the present invention.
FIG. 3E is a reference view for explaining a method of manufacturing an electrode assembly according to a still another embodiment of the present invention.
FIG. 3F is a flowchart illustrating a method of manufacturing an electrode assembly according to an embodiment of the present invention.
FIG. 4 is an exploded perspective view of a battery manufactured in accordance with an embodiment of the present invention.

### DETAILED DESCRIPTION OF THE INVENTION

Hereinafter, the preferred embodiments of the present invention will be described in detail with reference to the accompanying drawings.

The embodiments of the present invention are provided so that this disclosure thereof may be explained more thoroughly and completely to those skilled having a common knowledge in the related technological field, and the following embodiments may be changed into various kinds of types, and the present invention is not also limited to these embodiments. Rather, these embodiments are provided so that this disclosure may be described more precisely and completely, and may fully convey the concepts of the invention to those skilled in the art. Further, in the following drawings, a thickness and a size of each layer are exaggerated for convenience and clarity of explanation, and the same reference numerals denote the same elements in the drawings. As used herein, the term "and/or", includes any one of the listed items and all combinations of more than one item.

The terminology used herein is only for the purpose of describing particular embodiments and is not intended to be limiting of the invention. As used herein, the singular forms may include plural referents unless the context clearly dictates otherwise. Also, the expressions used in this specification, "comprise" and/or "comprising" are described to specify the presence of the stated forms, numbers, steps, operations, members, elements and/or presence of these groups and does not preclude the presence or addition of one or more other features, integers, operations, members, elements, and/or the groups.

Although the first and second terminologies are used herein to describe various members, components, regions, layers and/or portions, these members, components, regions, layers and/or portions should not be limited by these terminologies. These terminologies are only used to distinguish one member, one component, one region, one layer or one portion from another region, layer or another portion. Thus, the first member, the first component, the first region, the first layer or the first portion described below may refer to the second member, the second component, the second region, the second layer or the second portion without departing from the teachings of the present invention.

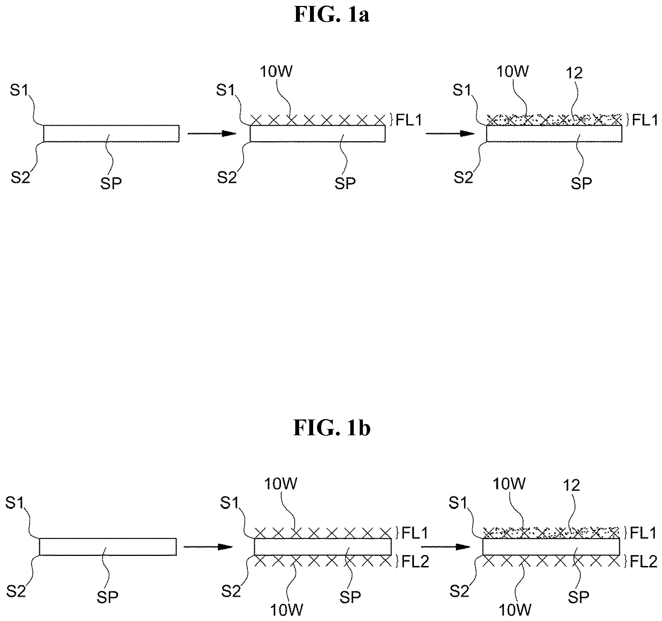

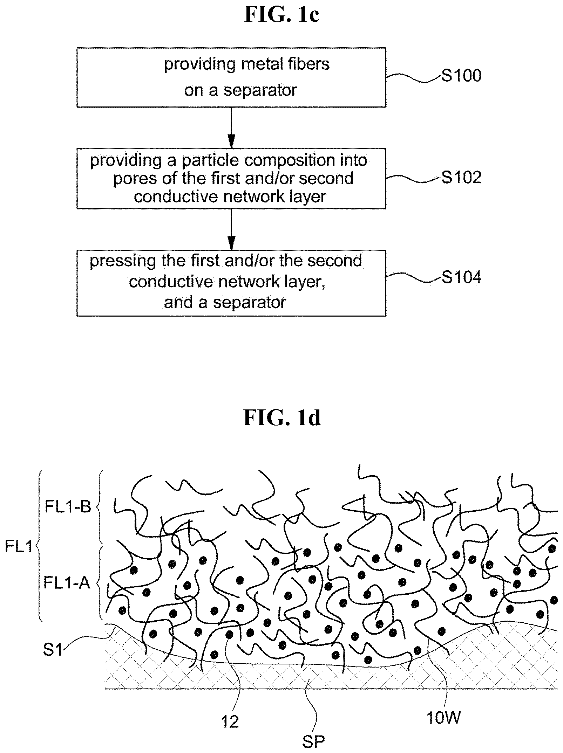

FIG. 1A is a reference view for explaining a method of manufacturing an electrode assembly according to an embodiment of the present invention, and FIG. 1B is a reference view for explaining a method of manufacturing an electrode assembly according to another embodiment of the present invention. FIG. 1C is a flowchart illustrating a method of manufacturing an electrode assembly according to an embodiment of the present invention. Hereinafter, a method of manufacturing the electrode assembly of FIG. 1C will be described with reference to FIG. 1A and FIG. 1B.

At least more than one or more metal fibers 10W are provided on the first peripheral surface S1 or the first peripheral surface S1 and the second peripheral surface S2 of the separator SP so that the first conductive network layer FL1, and the second conductive network layer FL2 may be formed(S100). Referring to FIG. 1A, at least more than one or more metal fibers 10W may be provided on a first peripheral surface S1 of a separator SP so that the first conductive network layer FL1 may be formed. Referring to FIG. 1B, at least more than one or more metal fibers 10W are provided on the first peripheral surface S1 of the separator SP, and the second peripheral surface S2 opposite to the first peripheral surface S1, so that the first conductive network layer FL1 and the second conductive network layer FL2 may be formed.

Referring to FIG. 1A, first of all, a separator SP having a first peripheral surface S1 and a second peripheral surface S2 opposite to the first peripheral surface S1 is provided for manufacturing an electrode assembly. The separator SP may be any one selected from a polyethylene film, a polypropylene film or a fiber type separator in which pores are formed in a composite structure thereof, a ceramic coated separator in which ceramic particles are coated on the separator, and a fiber type separator having nonwoven fabric or woven structure by using polymer fibers.

The separator SP may include a porous material with which an electrolyte is filled, and ion transfer may be easily realized. The separator SP comprising a porous material may form a porous matrix. For example, the porous material may be a polymeric microporous membrane, a woven fabric, a nonwoven fabric, a ceramic, or a combination thereof. In addition, the separator SP may further include an intrinsic solid polymer electrolyte membrane or a gel solid polymer electrolyte membrane. The intrinsic solid polymer electrolyte membrane may include, for example, a straight chain polymer material or a crosslinked polymer material. The gel solid polymer electrolyte membrane may be, for example any one selected from a plasticizer-containing polymer including a salt, a filler-containing polymer, or a pure polymer, or any combination thereof.

The separator SP may have a porous web structure of a fiber type. The porous web may be forms of Spunbond be composed of long filaments or Melt blown. The fiber type separator material uses high heat resistant materials such as polyethylene fiber, polypropylene fiber, polyethylene terephthalate fiber, cellulose fiber, Kevlar fiber, nylon fiber and polyphenylene sulfide fiber, and it may be prepared by the methods such as an electrospinning, a wet spinning, and a melt spinning, and may be used.

The fiber type separator may be a nonwoven or fabric structure. The separation membrane fabrication method of nonwoven structure is as follows. First of all, the fiber filaments are dispersed by using any one of a method for producing spun fibers in an irregular arrangement after an electro-spinning, a wet spinning, and a melt spinning are executed, a wet-laid method in which fiber filaments are dispersed in water or a solvent to precipitate the fiber filaments, a dry-laid method in which fiber filaments are dispersed in the air to precipitate the fiber filaments, a welding method in which fiber filaments are dispersed using a card machine to disperse the fiber filaments. Then, they may be manufactured by an accretion accomplished through a method in which a partial fusion may be realized by interlocking through needle punching, and applying heat and pressure. At this time, the diameter of the polymer fiber may be 1 nm or more and 100 m or less, and preferably, may be 10 nm or more and 30 m or less.

The separator SP may be a single layer film or a multilayer film, and the multilayer film may be a laminate of the same single layer film or a laminate of a single layer film formed of different materials. For example, the laminate may have a structure including a ceramic coated film on the surface of a polymer electrolyte membrane such as polyolefin.

In one embodiment, the separator SP may be formed of a material capable of maintaining its shape without causing shrinkage and warping at a high temperature of 100°C or a higher temperature. For this purpose, a deformation preventing member may be included in the ceramic layer formed on the first peripheral surface S1 and the second peripheral surface S2 of the separator SP, or the porous matrix of the separator SP. The deformation preventing member may maintain the characteristics of the separation membrane such as heat resistance, strength, and elasticity. For example, a fiber reinforcing member may be exemplified as the deformation preventing member.

In one embodiment, the pore size and porosity of the separator SP are not particularly limited, but the porosity may be 30% or more and 95% or less, and the average diameter of pores may be in a range of 1 nm or more and 10 m or less. When the pore size and the porosity are less than 1 nm and about 30%, respectively, it is difficult to sufficiently impregnate the electrolyte due to degradation of movement of the liquid electrolyte precursor. If the pore size and porosity are larger than about 10µm and 95%, it may be difficult to maintain mechanical properties.

In one embodiment, the pore size of the separator SP may be smaller than the particle size of the particle composition described below. Since the pore size of the separator SP is smaller than the particle size of the particle composition, an internal short circuit phenomenon occurs between the electrode assembly of the first polarity(anode or cathode) and the electrode assembly of the second polarity opposite to the first polarity may be prevented. The size of the pores corresponds to 1 nm or more and 10µm or less, and it is preferable that the size is smaller than the diameter of the metal fibers 10W.

In one embodiment, the thickness of the separator SP is not particularly limited, but may be in a range of 5µm or more and 300µm or less, and preferably, 10µm or more and 100µm or less. If the thickness of the separator SP is less than 5µm, it is difficult to maintain the mechanical properties. If the thickness of the separator SP is more than 300 µm, the separator SP acts as a resistive layer and may reduce the output voltage because of it. In addition, pliability of a battery may be deteriorated.

In one embodiment, as a method of providing the metal fibers on the separator SP, a method comprising steps for immersing the separator SP in the water or the solvent in which the metal fibers are dispersed and then removing the solvent(wet-laid) may be employed, so that the metal fibers may be provided on the separator. At this time, the binder materials such as cellulose, carboxymethyl cellulose, acrylic acid polymer, polyvinyl alcohol, and the like, which dissolves in water or a solvent may be further added. Strong bonding of the metal fibers 10W and the separator SP may be achieved simultaneously with the bonding between the metal fibers 10W by the binder materials. The metal fibers 10W may be precipitated in the solvent due to a difference in density and then, may be provided on the separator SP.

At least more than one or more of the metal fibers 10W may be used as a path for transferring electrons. In this case, a metal foil which is conventionally used mainly as a current collector may be omitted in the electrode assembly. The metal fibers 10W may comprise randomly intertwined nonwoven structures. The metal fibers 10W are electrically connected to each other through physical contact or chemical bonding while having generally a curved irregular shape. Therefore, a single conductive network is formed. Since the first conductive network layer FL1 or the second conductive network layer FL2 is formed by bending, folding, getting tangling, contacting or bonding with each other, the metal fibers 10W are mechanically rigid while including porosity therein. Because of the fiber properties, they have flexible property and give the flexibility for the entire electrode assembly. Further, the metal fibers 10W fixed to the surface of the separator SP may reinforce the strength of the separator SP. The electrolyte through the pores between the metal fibers 10W may be easily invasive, and transfer of positive ions such as lithium ions for a battery chemical reaction may be made through the electrolyte.

The first conductive network layer FL1 or the second conductive network layer FL2 may include metal filaments, carbon fibers, conductive polymer fibers, metal layers, conductive polymer layers or polymer fibers coated with a carbon layer(for example, metal-coated polyolefin fibers), or hollow metal fibers(for example, the fibers wherein the metal layer is left by manufacturing a sacrificial core made of carbon fibers or polymer fibers, coating a metal layer on the sacrificial core, and then oxidizing or burning, and removing the sacrificial core).

Further, the metal filaments may be a fibrous body containing a metal such as stainless steel, aluminum, nickel, titanium, copper, silver, gold, cobalt, zinc, the above-described electrically active material, or an alloy thereof. For example, in the case of the cathode, aluminum filaments or alloys thereof which are not oxidized in the high potential region may be used. In the case of the anode, copper, stainless steel, nickel filaments or alloys thereof which are electrochemically inactive at low operating potential may be used. In other embodiments, these materials may have a stacked structure in which the metals described in the above paragraphs are sequentially arranged, and may include a partially oxidized layer or an interlayer compound by heat treatment. Further, the metal filaments may be formed of different kinds of metal, so that different kinds of metal filaments may be formed in the conductive network of each electrode assembly.

The metal filaments may have a thickness in the range of 1µm to 200 µm. If the thickness of the metal filaments is less than 1 mu m, it will become difficult to form filaments having uniform physical properties, for example, uniform resistance, and it is also difficult to coat the electrically active material. When the thickness of the metal filaments exceed 200 µm, the surface area per volume of the metal filaments is decreased, so that it may be difficult to obtain the improvement of the cell performance due to the increase of the surface area and the energy density may also be reduced. Further, the binding effect of the electrically active material impregnated inside the electrode assembly is reduced and the electrically active material is detached from the conductive filament during repetitive charging and discharging, whereby the cycle characteristics of the battery may deteriorate.

At least any one or more of the length and the thickness of the metal filaments constituting the conductive network may be different from each other. For example, an electrode assembly may be formed by using long filaments and short filaments in combination. The length ratio of the short filaments to the long filaments may be in the range of 1% to 50%. The long filaments may determine the overall conductivity and mechanical strength of the electrode assembly and the short filaments may determine the internal resistance of the cell by enhancing the transfer path of electrons between the active filaments and the long filaments or the electrical connections between the long filaments.

The metal filaments have the advantage of being capable of a fiber manufacturing process such as nonwoven fabric processing, while having heat resistance, plasticity and electrical conductivity comparatively superior to other materials of the metal. Therefore, if the metal filament is used, it is possible to maintain such a material advantage in a full length range of substantially 5 mm or more, so that the process load of the intermingle process or thermal process may be remarkably reduced as compared with other materials. Further, a merit that the manufacturing process window is relatively wide may be acquired.

The solvent may comprise water in which the binder is dissolved. For example, the binder may include carboxymethyl cellulose, hydroxypropyl cellulose, hydroxypropylmethyl cellulose, hydroxyethyl cellulose, hydroxypropylethyl cellulose or methyl cellulose.

In another embodiment, the metal fibers 10W may be air-laid in the air and provided on the separator SP. For example, the metal fibers 10W may be dispersed by a dispersing equipment such as an air compressor and provided on the separator SP. The speed and the amount of dispersion of the metal fibers 10W on the separator SP may be controlled by the pressure intensity of the dispersing equipment.

The first conductive network layer FL1 or the second conductive network layer FL2 may further include a fiber type binder in addition to the metal fibers 10W. The fiber type binder is a filament-shaped polymeric material. The aspect ratio of the fiber type binder is in the range of 2 to 10⁵ filaments.

The fiber type binder may be formed of a polymeric material favorable to fibrosis. Such fiber type binders may include any one selected from the group consisting of polyethylene (PE), polypropylene(PP), polyethylene terephthalate(PET), polypropylene terephthalate(PPT), nylon, polyethylene naphthalate(PEN), polyether sulfone(PES), polyether ether ketone(PEEK), polyphenylene sulfide(PPS), polyvinylidene fluoride (PVDF), and copolymers thereof, or mixtures thereof. It is possible to form the first conductive network layer FL1 and/or the second conductive network layer FL2 according to a wet-laid manner by further including a fiber type binder together with the metal filament as a constituting component. Also, when forming the first conductive network layer FL1 and/or the second conductive network layer FL2 according to an air-laid manner, a fiber type binder may be used together with the metal filament as a constituting component. At this time, the content of the fiber type binder is preferably 1% or more and 70% or less, and the diameter of the fiber type binder is preferably 10 nm or more and 100 m or less.

In an embodiment, the coupling between the separation membrane SP and the metal fibers 10W may be accomplished when any one of the separation membrane SP and the metal fibers 10W may be partially heated and melted by the energy such as infra-red, ultraviolet, electron beam or ultrasound, and thus the gap between them is tightly adhered, or both of them may be partially heated and melted, and then bonded therebetween. Such a process has an advantage that a binder is not used and the environmental load is reduced. In another embodiment, the coupling between the separation membrane SP and the metal fibers 10W may be bonded by a binder between the separation membrane SP and the metal fibers 10W. For example, the binder may be an acrylic adhesive or an epoxy adhesive. Further, in another embodiment, one end of the segmented metal fibers 10W is stuck in the separator SP or dug in the separator SP so that a rigid connection between the metal fibers 10W and the separator SP may be obtained(See FIG. 1).

The particle composition may be provided in the pores of the first conductive network layer FL1 formed on the first peripheral surface S1 of the separator SP. Further, as shown in FIG. 1B, the particle composition may also be provided in the pores of the second conductive network layer FL2 formed on the second peripheral surface S2 of the separator SP. At this time, the electrically active materials of the second polarity provided in the pores of the second conductive network layer FL2 may have a polarity opposite to the electrically active materials of the first polarity provided in the pores of the first conductive network layer FL1.

The electrically active material may be in the form of particles, and the electrically active material may be particles having a size of 0.1µm to 100 µm. In the particle composition, in addition to the electrically active material, any one selected from a binder, a conductive material and porous ceramic particles, or an external additive selected from a combination of two or more selected from a binder, a conductive material and porous ceramic particles may be included. Therefore, the particle composition containing the electrically active material of the first polarity may be provided in the pores of the metal fibers 10W.

In one embodiment, the particle composition may be provided on the separator SP in the form of a slurry or powder and may be impregnated through the pores in the conductive network. Further, in another embodiment, the particle composition may be coated on the metal fibers 10W not provided on the separator SP, and may be provided on the separator SP.

In one embodiment, the particle composition may have a viscosity in the range of more than 1,000 cP (centi-poise) to less than 10,000 cP. When the viscosity of the particle composition is less than 1,000 cP, the viscosity of the particle composition becomes relatively thinner, which may result in difficulty in manufacturing the battery because the particle composition flows down in the manufacturing process of the battery. In addition, when the viscosity of the particle composition exceeds 10,000 cP, the particle composition may become a hard solid state and may interfere with flow of ions or compounds in the cell. Accordingly, the viscosity of the particle composition is preferably in the range of more than 1000 cP to less than 10,000.

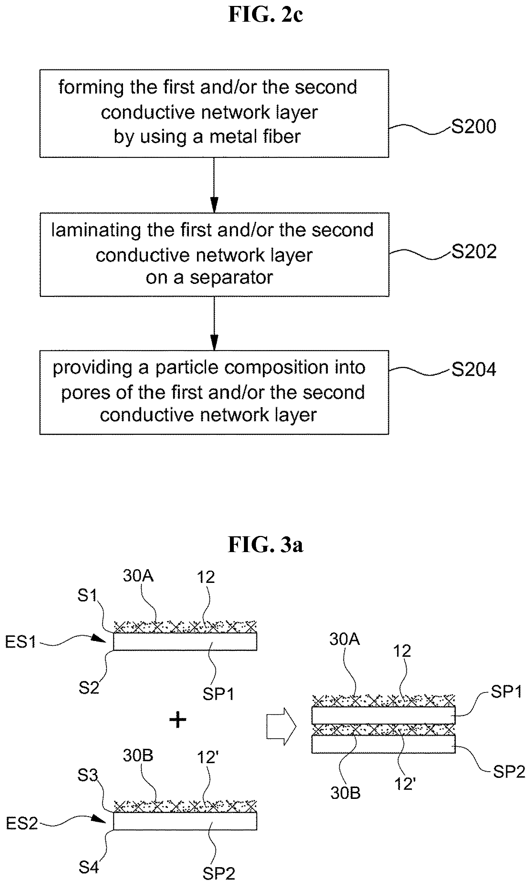

FIG. 1A and FIG. 1B illustrate that at least more than one or more metal fibers 10W are provided in a single separator SP, but the present invention is not limited thereto. The separator SP may be two or more as shown in FIGS. 3A to 3C, which will be described later. In this case, the two or more separators may have the same shape or different materials.

FIG. 1D is an enlarged reference view of a portion of an electrode assembly according to an embodiment of the present invention.

Referring to FIG. 1D, an electrode assembly including a first conductive network layer FL1 formed on a first peripheral surface S1 of a separator SP includes an active material 12 in the form of particles. The electrode assembly may be either a positive electrode or a negative electrode, but the present invention is not limited thereto.

The first conductive network layer FL1 may form one conductive network layer 10W having a porosity and in which at least more than one metal fiber 10W is randomly arranged, physically contacting each other, bent or folded, entangled with each other, and mechanically coupled. In one embodiment, the conductive network may form a nonwoven structure. The metal fibers 10W may include two or more different kinds of metals or metals having different lengths as required. In another embodiment of the present invention, the metal fibers 10W may be molded to have other regular and/or irregular shapes, such as curls or spirals, although the metal fibers 10W are generally straight and curved.

In one embodiment, a positive electrode or a negative electrode may be provided by including the active material 12 in the metal fibers 10W of the electrode assembly or by coating the active material 12 on the metal fibers 10W. In particular, the active material 12 may be impregnated in the first conductive network layer FL1 composed of the metal fibers 10W. That is, the active material 12 may be impregnated into the inner region FL1-A corresponding to the region in contact with the separator SP in the first conductive network layer FL1. Accordingly, on the surface FL1-B of the first conductive network layer FL1 opposite to the first peripheral surface of the first conductive network layer FL1, the active material 12 does not exist or only very tiny amount of the active material 12 may exist.

Referring to FIG. 1D, since active material 12 does not exist or only a very small amount of active material 12 exists on the exposed surfaces FL1-B of the first conductive network layer FL1, the ends of the segments constituting the metal fibers 10W or at least a portion of the segment may be exposed. Each of the metal fibers 10W may be composed of a segment in which an end portion is cut. These segments have a curved irregular shape and may be bent or folded, tangled and contacted, or combined to form a conductive network. The active material 12 is impregnated only in the inner region FL1-A of the first conductive network layer FL1 including the metal fibers 10W. Therefore, on the exposed surface FL1-B of the first conductive network layer FL1, an end part of a segment constituting the metal fibers 10W or a portion of the segment (for example, a portion of an annular segment, a portion of a square segment, a portion of a curved segment, and a segment of a spiral segment due to bending or flexibility of metal fibers may be included. Thus, the bond strength with other conductive network layers or other electrode assemblies that are bonded on the first conductive network layer FL1 may be increased by the ends of the exposed segments or at least a portion of the segments. That is, binding may be achieved by wedging or intertwining the ends of the exposed segments or portions of the segments between the active material or metal fibers present in another conductive network layer or other electrode assembly. Therefore, according to the present invention, since the exposed surface FL1-B is formed in the first conductive network layer FL1, the bonding strength with other conductive network layers or other electrode assemblies may be increased without additional members or additional processes. In addition, even if there is bending of the flexible electrode assembly, the phenomenon that the end of the segment end or the portion of the segment exposed to the exposed surface FL1-B is stuck or tangled in another conductive network layer or another electrode assembly is continuously maintained. Therefore, the interlayer coupling force may be more remarkably increased.

In one embodiment, the active material 12 in the form of particles is bound within the heat conduction network provided by the metal fibers 10W. The size and porosity of the pores in the conductive network forming the metal fibers 10W may be appropriately controlled, so that the active material 12 may be strongly bound to the heat conduction network. The size and porosity of the pores may be controlled by controlling the mixing weight ratio with the active material 12 in the electrode assembly of the metal fibers 10W.

In one embodiment, in the case of anode, the electrically active material 12 may be a material such as LiNiO₂, LiCoO₂, LiMnO₂, LiFePO₄ and LiV₂O₅, and these are only illustrative and the present invention is not limited thereto. For example, the anode active material may be selected from an oxide consisting of two components or more selected from lithium, nickel, cobalt, chromium, magnesium, strontium, vanadium, lanthanum, cerium, iron, cadmium, lead, titanium, molybdenum, or manganese; phosphate; sulfide; fluoride; or a combination thereof. For example, it may be a compound having three components or more such as Li[Ni, Mn, Co]O₂.

In one embodiment, in the case of cathode, the electrically active material 12 may include a carbon material(a low crystalline carbon which is soft carbon or hardened carbon/ highly crystalline carbons containing high temperature calcination such as natural graphite, Kish graphite, pyrolytic carbon, mesophase pitch based carbon fiber, meso-carbon microbeads, mesophase pitches, petroleum or coal tar pitch derived cokes/KetjenBlack/acetylene black/a metal lithium/ silicon compound such as silicon Si or silicon oxide/Sn compound such as tin Sn , alloy thereof or SnO₂/ bismuth Bi or its compounds / lead Pb or its compounds/ antimony Sb and its compounds /zinc (Zn) and its compounds/iron Fe and its compounds /cadmium Cd and its compounds/aluminum(AI) and its compound, but the present invention is not limited to these materials. For example, the electrically active material may include other metals capable of intercalation/deintercalation or alloying/dealloying of lithium, semi-metals, non-metals, or the compounds such as oxides thereof, nitrides, and fluorides. Further, it may contain at least any one selected from sodium, or other oxides, carbides, nitrides, sulfides, phosphides, selenides, and telemids suitable for NaS cells. The gelated or solidified electrolyte is strongly bound to the pores provided between the metal fibers 10W and the active material 12 and is also in contact with the entire interface of the active material 12 in the form of particles. Therefore, the electrolyte improves the wettability/contact with the active material 12, thereby reducing the contact resistance between the electrolyte and the active material 12 and improving the electrical conductivity.

In one embodiment, a binder may be further added so that the active material 12 of the form of particles may strongly bound in the electrode assembly. The binder may be, for example, a polymeric material such as vinylidene fluoride-hexafluoropropylene copolymer(PVdF-co-HFP), polyvinylidenefluoride(PVdF), polyacrylonitrile, polymethylmethacrylate polyolefins such as polymethylmethacrylate, polytetrafluoroethylene (PTFE), styrenebutadiene rubber(SBR), polyimide, polyurethane polymers, polyester polymers, and ethylene-propylene-diene copolymer(EPDM). The present invention is not limited to these examples, and it is possible to use a material having a predetermined binding force and stability under an electrochemical environment without being dissolved in an electrolyte.

In one embodiment, a conductive material may be further added to improve the electrical conductivity of the electrode assembly. The conductive material may be, for example, fine carbons such as carbon black, acetylene black, Ketjenblack and ultrafine graphite particles; or a nanostructure with large specific surface area and low resistance, such as nano metal particle paste, ITO(indium tin oxide) paste or carbon nanotube.

As another embodiment, although not shown, porous ceramic particles may be further added to the above-described electrode assembly. The porous ceramic particles may include, for example, porous silica. The porous ceramic particles may facilitate impregnation of the electrolyte into the electrode assembly.

The electrolyte may be absorbed into the electrode assembly within the exterior casing of the electrode. For example, in the electrolyte, a suitable aqueous electrolyte containing salt may be absorbed into the conductive network of the electrode assembly and/or the separator SP. To this end, the electrolyte may include an electrolyte salt, an electrolyte solvent, a crosslinkable monomer, and a thermal initiator for crosslinking and/or polymerizing the monomer, and may further include a non-crosslinked polymer for viscosity and elasticity control.

The electrolyte may be applied after the active material is impregnated in the electrode assembly. For example, the electrolyte may be immersed into the electrode assembly by injecting or coating the electrolyte on one side or the entire surface of the electrode, or by immersing the electrode into a bath containing the electrolyte. Further, in another embodiment, the slurry of the active material and the electrolyte may be impregnated together into the electrode assembly in the form of a mixed slurry.

The electrolyte may include any one selected from LiCI, LiBr, Lil, LiPF₆, LiClO₄, LiBF₄, LiCF₃SO₃, LiAsF₆, LiSbF₆, LiAlCl₄, LiB₁₀Cl₁₀, LiCF₃CO₂, CH₃SO₃Li, CF₃SO₃Li, LiN(C₂F₅SO₂)₂, LiN(CF₃SO₂)₂, LiC(CF₃SO₂)₃, LiC₄BO₃ and (CF₃SO₂)₂NL, which are lithium salts as an electrolytic salt or a mixture of two or more thereof. These materials are only exemplary and the present invention is not limited thereto. For example, the lithium salt may be lithium acetyl acetate, chloroborane lithium, lithium lower aliphatic carboxylate, lithium tetraphenylborate, or other ionizable salt. Further, the electrolyte salt may include any one selected from the group consisting of NaClO₄, KClO₄, NaPF₆, KPF₆, NaBF₄, KBF₄, NaCF₃SO₃, KCF₃SO₃, NaAsF₆ and KAsF₆, or an alkali metal salt including a mixture of two or more thereof in order to form a solid electrolyte interface on the active material. The electrolyte may also include salts such as potassium hydroxide(KOH), potassium bromide(KBr), potassium chloride(KCL), zinc chloride(ZnCl₂) and sulfuric acid(H₂SO₄).

The electrolyte solvent may include cyclic or acyclic ethers, amides such as acetamide, esters, linear carbonates, cyclic carbonates, or mixtures thereof. The ester may include any one selected from the group consisting of a sulfolane carboxylic acid ester, methyl acetate, ethyl acetate, propyl acetate, methyl propionate, ethyl propionate, γ-butyrolactone, γ-valerolactone, γ-caprolactone, σ-valerolactone and ε-caproiactone, or a mixture of two or more thereof. As specific examples of the linear carbonate compound, dimethyl carbonate(DMC), diethyl carbonate(DEC), dipropyl carbonate(DPC), ethyl methyl carbonate(EMC), methyl propyl carbonate (MPC), and ethyl propyl carbonate or a mixture of two or more thereof may be enumerated. Specific examples of the cyclic carbonate may include any one selected from a group consisting of ethylene carbonate(EC), propylene carbonate(PC), 1,2-butylene carbonate, 2,3-butylene carbonate, 1,2-pentylene carbonate, 2,3-pentylene carbonate, a vinylene carbonate, and a halide thereof, or a mixture of two or more thereof. These materials are illustrative, and other widely-known electrolytic solutions may be used.

After step S102, the first conductive network layer FL1 and/or the second conductive network layer FL2 impregnated with the particle composition and the separator SP are pressed(S104). The electrode assembly may have a plate-like structure having a predetermined thickness by the pressing step S104. The pressing step S104 may be performed using a roll press so as to increase the capacitance density of the electrode and to increase the adhesion between the conductive network and the electrical active material.

In one embodiment, if necessary, for example, when the binder particles or a precoated binder are contained in the conductive network of the metal fibers 10W on the separator SP. The energy for melting the binder may be applied to the metal fibers 10W on the separator SP during the compression step S104. The energy may be heat and/or ultraviolet radiation. The energy may be appropriately selected depending on the type of the binder, but the heating step may be generally carried out at a relatively low temperature, for example, 50°C or higher and 400°C or lower, preferably 100°C or higher and 300°C or lower. In the compression step S104, the surface of the electrode assembly may be pressed in one direction so that the electrode assembly may be formed.

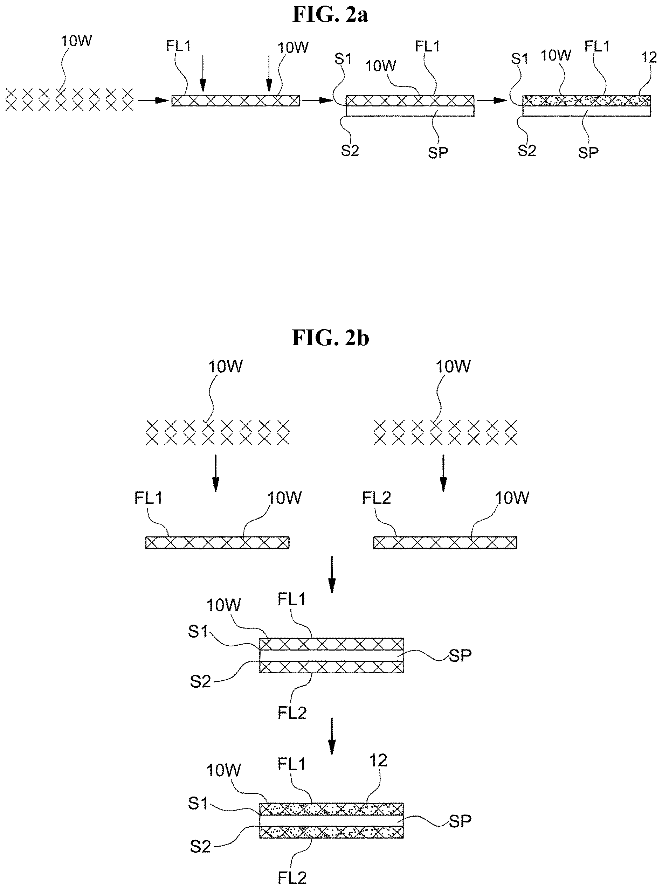

FIG. 2A is a reference view for explaining a method of manufacturing an electrode assembly according to still another embodiment of the present invention, and FIG. 2B is a reference view for explaining a method of manufacturing an electrode assembly according to still another embodiment of the present invention. Further, FIG. 2C is a flowchart illustrating a method of manufacturing an electrode assembly according to another embodiment of the present invention. Hereinafter, a method of manufacturing the electrode assembly of FIG. 2C will be described with reference to FIGS. 2A and 2B.

A first conductive network layer or a first conductive network layer and a second conductive network layer including at least more than one metal fibers 10W may be formed(S200). Referring to FIG. 2A, in order to manufacture an electrode assembly according to another embodiment of the present invention, at least more than one metal fiber 10W may be used to form one first conductive network layer FL1. Further, referring to FIG. 2B, a first conductive network layer FL1 and a second conductive network layer FL2 including at least more than one metal fibers 10W may be formed. The first conductive network layer FL1 and the second conductive network layer FL2 may be a fiber layer composed of metal fibers 10W. Such a fiber layer may further include a fiber type binder in addition to the metal fibers. In case of the fibrous layer, a nonwoven structure may be obtained by a process for randomly mixing the fiber type binder with the metal fibers and an interlocking process or the like. A bonded structure thereof may be acquired through a fiber blending process.

The fiber type binder may comprise a polymeric material that is advantageous for fibrosis. For example, the fiber type binder may include polyethylene(PE), polypropylene(PP), polyethylene terephthalate(PET), polypropylene terephthalate(PPT), nylon, polyethylene naphthalate(PEN), polyether sulfone(PES), polyetheretherketone(PEEK), polyphenylene sulfide(PPS), polyvinylidene fluoride (PVDF), derivatives such as copolymers thereof or mixtures thereof. At this time, the content of the fiber type binder is preferably 1% or more and 70% or less, and the diameter of the fiber type binder is preferably 10 nm or more and 100 m or less. These materials are illustrative, and the present invention is not limited thereto. The fiber type binder may further include mechanical or heat-resistant functional polymer materials such as high strength, high elasticity, and self-shrinkable fibers. Such a fiber type binder may improve the tensile strength of the first conductive network layer (FL1) or the second conductive network layer (FL2) and the restoring force of elasticity of the polymer fibers, thereby reducing or suppressing plastic deformation during use of the flexible battery. As a result, it becomes possible to improve the life of the battery.

The metal fibers 10W may be a plural type which is segmented so as to have a predetermined length. In some embodiments, in order to form the fiber layer of the nonwoven structure, the metal fibers may be segmented to have a length of about 5 cm to 8 cm. In one embodiment, at least more than one or more metal fibers 10W may be randomly deployed on a suitable support plane to form a fibrous layer. In this case, the metal fibers 10W may be laminated to a single layer or a thickness of several to several hundred layers, so that the metal fibers may be randomly arranged to have a nonwoven structure. The fiber layer including at least more than one or more metal fibers 10W may be formed according to a carding method.

In one embodiment, the metal fibers 10W may be deformed by tapping the randomly deployed metal fibers 10W with a rod, whereby the metal fibers 10W are entangled with each other to form a nonwoven structure. The metal fibers 10W in the fiber layer make physical contact with each other to form a somewhat coarse conductive network. Alternatively, chemical bonding may be ensured between the metal fibers 10W through a suitable heat treatment. In this case, the heat treatment may be performed at, for example, 100 °C or higher and 1200 °C or lower.

In one embodiment, first of all, the electrically active material may be uniformly pre-coated on the metal fibers 10W first. To this end, a mixed composition of finely divided active particles and a binder is dispersed using a suitable solvent, the metal fiber 10W is immersed in the resultant, and the solvent is removed through a drying process. As a result of it, a metal fiber coated with the electrically active material may be obtained. The electrical active material to be pre-coated may be another kind of active material having the same as the electrically active material 12 to be invaded into the conductive network, or having chemical affinity. Alternatively, in order to prevent the erosion of the metal fibers 10W by the electrolytic solution, the pre-coated layer may include another metal or metal oxide coating having corrosion resistance.

At least more than one or more metal fibers 10W may be pressed to form a fiber layer. The pressing process may press the surface of at least more than one or more metal fibers 10W in one direction. Because of this pressing process, the adjacent metal fibers are entangled with the metal fibers of the other layer, and are brought into mutual physical contact. As a result, a conductive network over entire volume of a fiber layer may be formed. The fiber layer formed from at least more than one or more metal fibers 10W by the pressing process may have a plate-like structure having a predetermined thickness.

In one embodiment, the metal fibers 10W in the fiber layer may be intermingled and bonded together using fibrous properties. At least more than one or more metal fibers 10W may be mechanically coupled to each other and integrated. The bonding between one metal fiber 10W and the other metal fiber 10W may be performed by a needle punching method, a spun lace method, a stitch bonding method or a mechanical bonding using other suitable methods. The needle punching method involves a step for making the metal fibers 10W be intermingled by repeatedly inserting and removing many needles with hooks vertically into metal fibers having the conductive network formed therein. By appropriately designing the shape of the needles, a nonwoven fabric of velours may be manufactured. The spun lace method is a method in which metal fibers 10W are interlocked with each other using water of a high-speed jet instead of a needle, and is also referred to as a water-flow interlocking method. The stitch bonding method is to perform a sewing along the electrode assembly.

Since the fiber layer is integrated with the metal fibers 10W by interlocking with each other, if the amount of the metal fibers 10W is reduced, a soft product having a large pore size may be produced. Further, considering the fact that the metal fibers 10W are in physical contact with each other in a detachable manner, and the tensile strength is improved only in a horizontal direction with respect to the first peripheral surface S1 of the separator, shrinking expansion in the direction perpendicular to the first peripheral surface S1 and the second peripheral surface S2, or absorption of internal volume change within a limited volume may be easily performed, so that it may be possible to flexibly respond to changes in the volume of the electrode that may occur during charging or discharging. As a result, the fiber layer formed using the metal fibers 10W does not cause irreversibility such as a crack of the electrode, and thus, the lifetime of the battery may be improved.

After step S200, the first conductive network layer FL1 or the first conductive network layer FL1 and the second conductive network layer FL2 may be laminated on the separator SP(S202). Referring to FIG. 2A, the first conductive network layer FL1 may be melted by heat treatment and stacked on the first peripheral surface S1 of the separator SP. Further, referring to FIG. 2B, the first conductive network layer FL1 may be laminated on the first peripheral surface S1 of the separator SP and the second conductive network layer FL2 may be laminated on the second peripheral surface S2 of the separator SP.

In one embodiment, the energy may be applied to a first conductive network layer FL1 and/or a second conductive network layer FL2 in order to melt the first conductive network layer FL1 and/or the second conductive network layer FL2, both of which include the metal fibers 10W on the separator SP. The energy may be heat and/or ultraviolet radiation. The energy may be appropriately selected according to the kind of the first conductive network layer FL1 and/or the second conductive network layer FL2, but usually a heating step is performed at a relatively low temperature, for example, 50 °C or higher and 400 °C or lower, preferably, 100 °C or more and 300 °C or less.

In another embodiment, the first conductive network layer FL1 and/or the second conductive network layer FL2 may be bonded to the first peripheral surface S1 and the second peripheral surface S2 of the separator SP by using an adhesive have. For example, the adhesive may be an acrylic adhesive or an epoxy adhesive.

After step S202, a particle composition comprising the electrically active material in a particle form may be provided in the pores of the first conductive network layer FL1 and/or the second conductive network layer FL2 combined with the separator SP(S204). The electrically active material may be in the form of particles, and the electrically active material may be particles having a size of 0.1µm to 100µm. In the particle composition, in addition to the electrically active material, an external additive selected from any one selected from a binder, a conductive material and porous ceramic particles or a combination of two or more thereof may be included. A particle composition comprising an electrically active material of a first polarity may be provided in the pores of the first conductive network layer FL1. In addition, a particle composition comprising a second polarity electrically active material may be provided in the pores of the second conductive network layer FL2. At this time, the electrically active materials of the second polarity provided in the pores of the second conductive network layer FL2 may have a polarity opposite to the electrically active materials of the first polarity provided in the pores of the first conductive network layer FL1.

Referring to FIG. 2A, the particle composition may be provided on a first conductive network layer FL1 combined with a separation membrane (SP) in a slurry or powder form and then, may be impregnated through the pores. Further, referring to FIG. 2B, a particle composition including an electrically active material in the form of particles may be provided on the first conductive network layer FL1 and the second conductive network layer FL2 combined with the separator SP. The particle composition may be provided on the first conductive network layer FL1 bonded to the first peripheral surface S1 and the second conductive network layer FL2 bonded to the second peripheral surface SP2 of the separator SP as a slurry or powder form, and may be impregnated through the pores. In one embodiment, the particle composition may be sprayed or coated on the first conductive network layer FL1 and/or the second conductive network layer FL2 and may be provided on the metal fibers 10W.

In one embodiment, if necessary, vibrations having a suitable frequency and intensity may be applied to facilitate uniform invasion of the particle composition between pores between the metal fibers 10W while providing the particle compositions.

On the other hand, although not shown in Fig. 2C, the separator SP including the metal fibers 10W impregnated with the particle composition may be pressed again. The electrode assembly may have a plate-like structure having a predetermined thickness by the pressing step. The pressing step may be carried out using a roll press to increase the capacity density of the electrode and to increase the adhesion between the conductive network and the electrically active material.

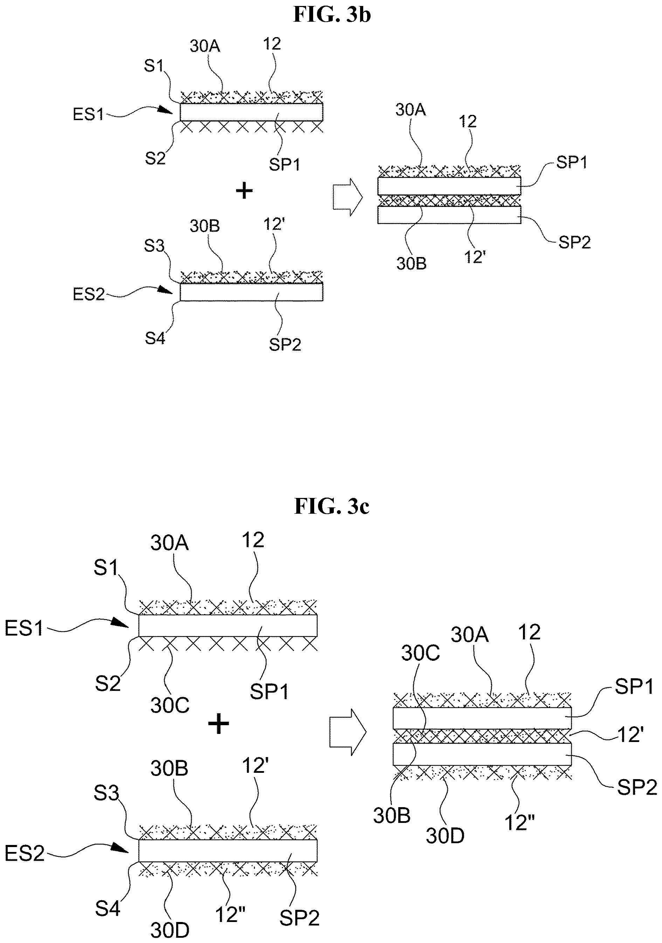

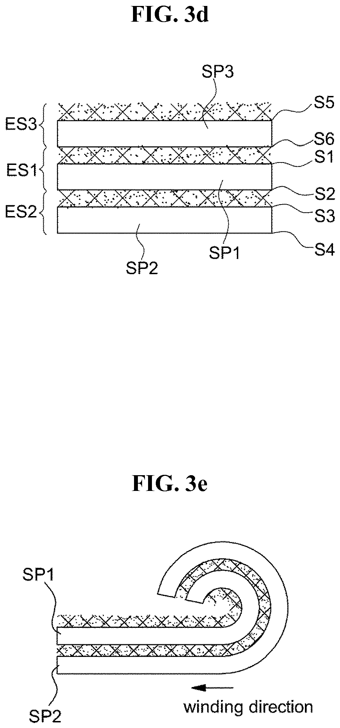

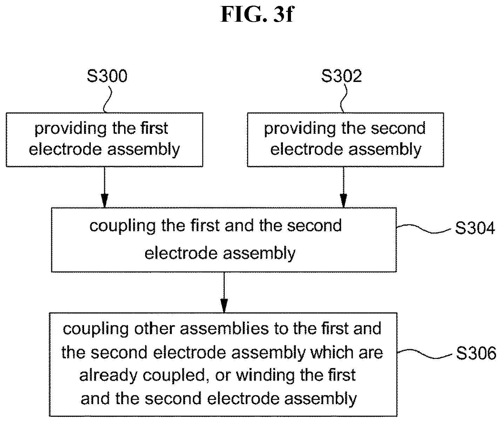

FIG. 3A is a reference view for explaining a method of manufacturing a battery according to an embodiment of the present invention. FIG. 3B is a reference view for explaining a method of manufacturing a battery according to another embodiment of the present invention. FIG. 3C is a reference view for explaining a method of manufacturing a battery according to still another embodiment of the present invention. FIG. 3D is a reference view for explaining a method of manufacturing a battery according to still another embodiment of the present invention. FIG. 3E is a reference view for explaining a method of manufacturing a battery according to still another embodiment of the present invention. FIG. 3F is a flowchart illustrating a method of manufacturing a battery according to an embodiment of the present invention. Hereinafter, the method of manufacturing the battery of FIG. 3F will be described with reference to FIG. 3A to FIG. 3E.

The first metal fibers 30A, the second metal fibers 30B, the third metal fibers 30C and the fourth metal fibers 30D to be described below may have the same properties as the metal fibers 10W of FIG. 1A and 2A described above. Since the first metal fibers 30A, the second metal fibers 30B, the third metal fibers 30C and the fourth metal fibers 30D are formed by bending or folding, tangling, contacting or bonding, it is mechanically rigid even if pores are included, and may be very flexible due to its fiber properties.

A first electrode assembly and a second electrode assembly are provided (S300 and S302).

Referring to FIG. 3A, the first electrode assembly ES1 may include a first separator SP1 having a first peripheral surface S1 and a second peripheral surface S2 opposite to the first peripheral surface S1; and the first particle composition comprising at least more than one first metal fibers 30A forming the conductive network on the first peripheral surface S1 of the first separator SP1, and the electrically active material 12 of the first polarity in the pores between the first metal fibers 30A. In one embodiment, the first electrode assembly ES1 may be the electrode assembly of FIG. 1A or FIG. 2A described above.

Further, referring to FIG. 3A, the second electrode assembly ES2 may include the second particle composition comprising a second separator SP2 having a third peripheral surface S3, and a fourth peripheral surface S4 opposite to the third peripheral surface S3; at least more than one second metal fibers 30B for forming a conductive network on the third peripheral surface S3 of the second separator SP2; and a second particle composition comprising an electrically active material 12 ' of the second polarity opposite to the first polarity in the pores between the second metal fibers 30B. The second peripheral surface S2 of the first separator SP1 and the third peripheral surface S3 of the second separator SP2 may be opposed to each other. In one embodiment, the second electrode assembly ES2 may be the electrode assembly of FIG. 1A or FIG. 2A described above.

Referring to FIG. 3B, the first electrode assembly ES1 may include the first particle composition comprising a first separator SP1 having a first peripheral surface S1 and a second peripheral surface S2 opposite to the first peripheral surface S1; at least more than one first metal fibers 30A for forming a conductive network on the first peripheral surface S1 of the first separator SP1; and at least more than one second metal fibers 30C for forming a conductive network on the second peripheral surface S2 of the first separator SP1; and an electrically active material 12 of the first polarity in the pores between the first metal fibers 30A provided on the first peripheral surface S1 of the first separator SP1. In one embodiment, the first electrode assembly ES1 may be the electrode assembly of FIG. 1B or FIG. 2B described above.

Further, referring to FIG. 3B, the second electrode assembly ES2 may include a second particle composition comprising a second separator SP2 having a third peripheral surface S3 and a fourth peripheral surface S4 opposite to the third peripheral surface S3; at least more than one second metal fibers 30B for forming the conductive network on the third peripheral surface S3 of the second separator SP2; and an electrically active material 12 ' of the second polarity opposite to the first polarity in the pores between the second metal fibers 30B. The second peripheral surface S2 of the first separator SP1 and the third peripheral surface S3 of the second separator SP2 may be opposed to each other. In one embodiment, the second electrode assembly ES2 may be the electrode assembly of FIG. 1A or FIG. 2A described above.

Referring to FIG. 3C, the first electrode assembly ES1 may include the first particle composition comprising a first separator SP1 having a first peripheral surface S1 and a second peripheral surface S2 opposite to the first peripheral surface S1; at least more than one first metal fibers 30A forming a conductive network on the first peripheral surface S1 of the first separator SP1; and at least more than one or more the third metal fibers 30C for forming a conductive network on the second peripheral surface S2 of the first separator SP1; an electrically active material 12 of the first polarity in the pores between first metal fibers 30A provided on the first peripheral surface S1 of the first separator SP1. In one embodiment, the first electrode assembly ES1 may be the electrode assembly of FIG. 1B or FIG. 2B described above.

Further, referring to FIG. 3C, the second electrode assembly ES2 may include a second separator SP2 having a third peripheral surface S3, and a fourth peripheral surface S4 opposite to the third peripheral surface S3; at least more than one second metal fibers 30B for forming a conductive network on the third peripheral surface S3 of the second separator SP2; and at least more than one fourth metal fibers 30D for forming a conductive network on the fourth peripheral surface S4 of the second separator SP2. In addition, the second electrode assembly ES2 may include an electrically active material 12 ' of the second polarity opposite to the first polarity in the pores between the second metal fibers 30B. The second peripheral surface S2 of the first separator SP1 and the third peripheral surface S3 of the second separator SP2 may be opposed to each other. In one embodiment, the second electrode assembly ES2 may be the electrode assembly of FIG. 1B or FIG. 2B described above.

After steps S300 and S302, the first electrode assembly ES1 and the second electrode assembly ES2 may be coupled(S304). The first main electrode assembly ES1 and the second electrode assembly ES2 are bonded to each other by the adhesive, so that the second peripheral surface S2 of the first electrode assembly ES1 and the third peripheral surface S3 of the second electrode assembly ES2 may face to each other.

Referring to FIG. 3A, since no metal fibers are formed on the second peripheral surface S2 of the first separator SP1, the second metal fibers 30B formed on the third peripheral surface S3 of the second separator SP2, which faces the second peripheral surface S2, may form a conductive network by itself between the first separator SP1 and the second separator SP2. Further, referring to FIG. 3B and FIG. 3C, at least more than one third metal fibers 30C on the second peripheral surface S2 of the first separator SP1; and at least more than one second metal fibers 30B formed on the third peripheral surface S3 of the second separator SP2 are interlocked and physically brought into contact with each other so that a conductive network may be formed between the first separator SP1 and the second separator SP2. Referring to FIG. 3C, the fourth metal fibers 30D formed on the fourth peripheral surface S4 of the second separator SP2 may form a conductive network itself between the first separator SP1 and the second separator SP2.

Referring to FIG. 3B and FIG. 3C, a fiber density of at least more than one third metal fibers 30C formed on the second peripheral surface S2 of the first separator SP1 may be smaller than that of at least more than one second metal fibers 30B formed on the third peripheral surface S3 of the second separator SP2. That is, the second metal fibers 30B are formed more densely than the third metal fibers 30C. Accordingly, the second metal fibers 30B and the third metal fibers 30C are naturally coupled due to an interlocking process so that the physical coupling may be easily realized. Consequently, the bonding force between the first and second metal fibers 30B and 30C may be improved.

After step S304, at least more than one electrode structures may be coupled to the first electrode assembly and the second electrode assembly which are coupled, or the first electrode assembly and the second electrode assembly may be wound (S306).

At least more than one electrode assemblies having the same structure as that of the first electrode assembly or the second electrode assembly may be coupled to a surface opposite to a surface to which the first electrode assembly and the second electrode assembly are coupled, and thereby, a stack structure may be formed. Referring to FIG. 3D, the third electrode assembly ES3 may be coupled to the upper portion of the first electrode assembly ES1 in a state where the first electrode assembly ES1 and the second electrode assembly ES2 are coupled. The third electrode assembly ES3 may be the electrode assembly of FIGS. 1A, 1B, 2A, or 2B described above. The third electrode assembly ES3 may include the third separator SP3; at least more than one fifth metal fibers 30E for forming a conductive network on the fifth peripheral surface S5 of the third separator SP3; and an electrically active material 12' of the second polarity opposite to the first polarity of the electrically active material of the first electrode assembly ES1 in the pores of the fifth metal fibers 30E. The sixth peripheral surface S6 of the third separator SP3 and the first peripheral surface S1 of the first separator SP1 may be opposed to each other. FIG. 3D shows a stack structure in which the first electrode assembly ES1, the second electrode assembly ES2 and the third electrode assembly ES3 are coupled, but this is merely an example. One or more electrode structures may be coupled on the second electrode assembly ES2 or the third electrode assembly ES3 to form the stack structure of the cell.

On the other hand, as the structure of the battery, the first electrode assembly ES1 and the second electrode assembly ES2 may be wound in a coupling state to form a winding structure. Referring to FIG. 3E, a cylindrical battery can be formed by winding the first electrode assembly and the second electrode assembly coupled to each other in the winding direction. However, FIG. 3E illustrates a method for winding the first electrode assembly ES1 and the second electrode assembly ES2 of FIG. 3A. In the same manner, the first electrode assembly ES1 and the second electrode assembly ES2 of FIG. 3B or FIG 3C may be wound. The stack structure and the winding structure described above may be applied in combination with each other. For example, a plurality of electrode assemblies may be stacked and then wound to obtain a battery having increased capacity or output voltage.

The electrolytic solution may be injected into the battery formed according to the stack structure or the winding structure. After injecting the electrolyte into the electrode assembly, a gelation or solidification step may be performed. Further, after formation of the battery, an exterior case sealing step of sealing an exterior case to receive the battery may be performed. In the exterior case sealing step, the above-described battery may be sealed in an exterior case such as a pouch.

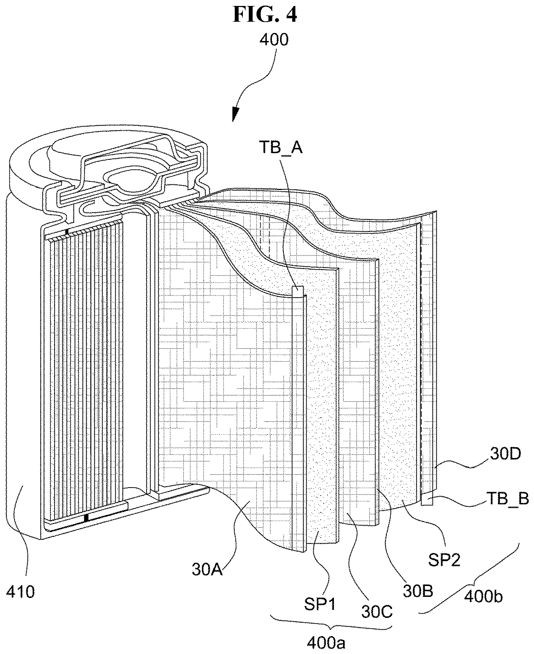

FIG. 4 is an exploded perspective view of a battery manufactured according to an embodiment of the present invention. Referring to FIG. 4, a battery 400 may be a cylindrical battery. The battery may include a first electrode assembly 400a having a first polarity and a second electrode assembly 400b having a second polarity and the first electrode assembly 400a, and may have a jelly roll structure which is manufactured according to a manner in which the first electrode assembly 400a and the second electrode assembly 400b are coupled and wound. This is only exemplary and may be composed of only one electrode of the positive electrode and the negative electrode. It may also be made of other coin-shaped cells, a square cell, or flexible cells of various shapes using fibers. In one embodiment, as the first electrode assembly 400a and the second electrode assembly 400b, the first electrode assembly or the second electrode assembly of FIGS. 3A, 3B, and 3C described above may be applied.

In one embodiment, a tab or a lead TB_A may be attached to the side of the first electrode assembly 400a. In addition, a tab or a lead TB_B may be attached to the side of the second electrode assembly 400b. The number of taps or leads TB_A, TB_B may have an appropriate number to reduce the internal resistance. The tabs or leads TB_A, TB_B may be electrically coupled to the electrode assembly by fusing or soldering. The tabs or leads TB_A and TB_B are arranged to expose or protrude to from inside of the exterior case 410 to outside of the exterior case 410. Therefore, the battery 400 according to the embodiment of the present invention may be formed.

The first separator SP1 and the second separator SP2 may be a single layer film or a multilayer film, and the multilayer film may be a laminate of the same single layer film or a laminate of a single layer film formed of different materials. For example, the laminate may have a structure including a ceramic coating film on the surface of a polymer electrolyte membrane such as polyolefin.

In the exterior case 410, a suitable aqueous electrolyte solution comprising a salt such as potassium hydroxide(KOH), potassium bromide(KBr), potassium chloride(KCL), zinc chloride(ZnCl₂) and sulfuric acid(H₂SO₄) is absorbed into the first electrode assembly 400a, the second electrode assembly 400b, and/or the first separator SP1 and the second separator SP2, so that a battery 400 may be completed.

In another embodiment, the battery 400 may be a nonaqueous electrolytic solution such as ethylene carbonate, propylene carbonate, dimethyl carbonate or diethyl carbonate containing a lithium salt such as LiClO₄ or LiPF₆, but the present invention is not limited thereto. Further, although not shown, a suitable cooling device or a battery managing system for controlling stability and/or power supply characteristics during use of the battery 400 may additionally be coupled.

It will be apparent to those skilled in the art that the present invention described above is not limited to the above-described embodiments and the accompanying drawings, and various substitution, modifications and variations may be made in the present invention without departing from the spirit or scope of the invention as defined in the appended claims.

## Claims

1. A method of manufacturing an electrode assembly comprising,
providing a separator;
forming a first conductive network layer comprising at least more than one first metal fibers on a first peripheral surface of the separator; and
providing a first particle composition comprising an electrically active material of a first polarity in the pores of the first conductive network layer.

2. The method of manufacturing an electrode assembly according to the claim 1, wherein the separator includes at least any one selected from a polyethylene film, a polypropylene film, or a film-type separator in which pores are formed in a composite structure thereof, a ceramic coated separator in which ceramic particles are coated on the separator, and a fiber type separator having nonwoven fabric or woven structure by using polymer fiber.

3. The method of manufacturing an electrode assembly according to the claim 2, wherein the fiber type separator may contain at least any one selected from polyethylene fiber, polypropylene fiber, polyethylene terephthalate fiber, cellulose fiber, Kevlar fiber, nylon fiber and polyphenylene sulfide fiber.

4. The method of manufacturing an electrode assembly according to the claim 2, wherein a diameter of the polymer fiber may be 1 nm or more and 100 m or less.

5. The method of manufacturing an electrode assembly according to the claim 1, wherein the separator may have the thickness between 10µm or more and 100µm or less, and the porosity may be 30% or more and 95% or less.

6. The method of manufacturing an electrode assembly according to the claim 1, wherein on a surface of the first conductive network layer opposite to a surface in contact with the first peripheral surface, an exposed surface may be formed for bonding with an adjacent layer.

7. The method of manufacturing an electrode assembly according to the claim 6, wherein the first particle composition is provided only into the inner side of the first conductive network layer so that an end of a segment or at least a portion of the segment for forming the first metal fibers may be exposed on the exposed surface.

8. The method of manufacturing an electrode assembly according to the claim 1, further comprising a step for forming a second conductive network layer comprising at least more than one second metal fibers on a second peripheral surface opposite to the first peripheral surface of the separator.

9. The method of manufacturing an electrode assembly according to the claim 8, further comprising a step for providing a second particle composition including an electrically active material of a second polarity opposite to the first polarity into the pores of the second conductive network layer.

10. The method of manufacturing an electrode assembly according to the claim 1, wherein the first conductive network layer may be formed by providing the separator into a solvent in which the first metal fibers are dispersed.

11. The method of manufacturing an electrode assembly according to the claim 1, wherein the first conductive network layer may be formed by providing the separator into the air in which the first metal fibers are dispersed.

12. The method of manufacturing an electrode assembly according to the claim 1, further comprising a step for pressing the first conductive network layer provided with the first particle composition, and the separator.

13. A method of manufacturing an electrode assembly comprising,
forming a first conductive network layer including at least more than one first metal fibers;
stacking the first conductive network layer on a first peripheral surface of the separator;
compressing the first conductive network layer and the separator provided with the first particle composition described according to the claim 1; and
providing a first particle composition comprising pores of electrically active materials of the first polarity into the pores of the first conductive network layer.

14. The method of manufacturing an electrode assembly according to the claim 13, wherein on a surface of the first conductive network layer opposite to the surface in contact with the first peripheral surface, an exposed surface is formed for bonding with the adjacent layer.

15. The method of manufacturing an electrode assembly according to the claim 14, wherein the first particle composition is provided only into the inner side of the first conductive network layer so that an end of a segment or at least a portion of the segment for forming the first metal fibers is exposed on the exposed surface.

16. The method of manufacturing an electrode assembly according to the claim 13, further comprising a step for stacking a second conductive network layer comprising at least more than one second metal fibers on a second peripheral surface opposite to the first peripheral surface of the separator.

17. The method of manufacturing an electrode assembly according to the claim 16, further comprising a step for providing a second particle composition including electrically active materials of a second polarity opposite to the first polarity into the pores of the second conductive network layer.

18. The method of manufacturing an electrode assembly according to the claim 13, wherein the first conductive network layer including a fiber layer in which the first metal fibers are randomly arranged may be formed by a carding method.

19. The method of manufacturing an electrode assembly according to the claim 18, wherein the fiber layer may be laminated on the separator by at least any one selected from a melting process through a heat treatment and an adhesion process using an adhesive.

20. The method of manufacturing an electrode assembly according to the claim 18, wherein the fiber layer further includes a fiber type binder in addition to the first metal fibers.

21. The method of manufacturing an electrode assembly according to the claim 20, wherein the fiber type binder includes at least any one selected from the group consisting of polyethylene(PE), polypropylene(PP), polyethylene terephthalate(PET), polypropylene terephthalate(PPT), nylon, polyethylene naphthalate(PEN), polyethersulfone(PES), polyetheretherketone(PEEK), polyphenylene sulfide(PPS), polyvinylidene fluoride(PVDF), and copolymers thereof, or mixtures thereof.

22. An electrode assembly comprising,
a separator;
a first conductive network layer comprising at least more than one first metal fibers on a first peripheral surface of the separator; and
electrically active materials of the first polarity impregnated into the pores of the first conductive network layer.

23. The electrode assembly according to the claim 22, wherein the separator includes at least any one selected from a polyethylene film, a polypropylene film, or a film type separator in which pores are formed in a composite structure thereof, a ceramic coated separator in which ceramic particles are coated on the film type separator, and a fiber type separator having nonwoven fabric or woven structure by using polymer fibers.

24. The electrode assembly according to the claim 23, wherein the fiber type separator includes at least any one selected from polyethylene fiber, polypropylene fiber, polyethylene terephthalate fiber, cellulose fiber, Kevlar fiber, nylon fiber and polyphenylene sulfide fiber.

25. The electrode assembly according to the claim 23, wherein a diameter of the polymer fibers may be 1 nm or more and 100 m or less.

26. The electrode assembly according to the claim 22, wherein the separator may have a thickness between 10µm or more and 100µm or less, and the porosity may be 30% or more and 95% or less.

27. The electrode assembly according to the claim 22, wherein a surface of the first conductive network layer opposite to the surface in contact with the first peripheral surface includes an exposed surface for bonding with an adjacent layer.

28. The electrode assembly according to the claim 27, wherein the first particle composition is provided only into the inner side of the first conductive network layer so that an end of a segment or a portion of the segment for forming the first metal fibers may be exposed on the exposed surface.

29. The electrode assembly according to the claim 22, further comprising a second conductive network layer comprising at least more than one second metal fibers formed on a second peripheral surface opposite to the first peripheral surface of the separator.

30. The electrode assembly according to the claim 29, further comprising a second particle composition comprising electrically active materials of a second polarity opposite to the first polarity in the pores of the second conductive network layer.

31. The electrode assembly according to the claim 22, wherein the first conductive network layer further includes a fiber type binder in addition to the first metal fibers.

32. The electrode assembly according to the claim 31, wherein the fiber type binder includes at least any one selected from the group consisting of polyethylene(PE), polypropylene(PP), polyethylene terephthalate(PET), polypropylene terephthalate(PPT), nylon, polyethylene naphthalate(PEN), polyether sulfone(PES), polyetheretherketone(PEEK), polyphenylene sulfide(PPS), polyvinylidene fluoride(PVDF), and copolymers thereof, or mixtures thereof.

33. A method of manufacturing a battery, comprising;
forming a first conductive network layer comprising at least more than one or more first metal fibers on the first peripheral surface of a first separator having the first peripheral surface and a second peripheral surface opposite to the first peripheral surface, and providing a first electrode assembly impregnated with a first particle composition comprising electrically active materials of a first polarity in pores of first conductive network layer;
forming a second conductive network layer comprising at least one second metal fibers on the third peripheral surface of the second separator having a third peripheral surface and a fourth peripheral surface opposite to the third peripheral surface, and for providing a second electrode assembly in which a second particle composition comprising electrically active materials of a second polarity opposite to the first polarity is impregnated in pores of the second conductive network layer; and
coupling the first electrode assembly and the second electrode assembly, so that the second peripheral surface of the first separator and the third peripheral surface of the second separator may face each other.

34. The method of manufacturing a battery, according to the claim 33, wherein a third conductive network layer including at least more than one third metal fibers is formed on the second peripheral surface of the first separator.

35. The method of manufacturing a battery, according to the claim 34, wherein a fiber density of the third metal fibers formed on the second peripheral surface of the first separator is smaller than that of the second metal fibers formed on the third peripheral surface of the second separator.

36. The method of manufacturing a battery, according to the claim 33, wherein a fourth conductive network layer including at least more than one fourth metal fibers on the fourth peripheral surface of the second separator is formed.

37. The method of manufacturing a battery, according to the claim 33, further comprising a step for coupling at least more than one electrode assemblies having the same structure as that of the first electrode assembly or the second electrode assembly to a surface opposite to a surface to which the first electrode assembly and the second electrode assembly are coupled.

38. The method of manufacturing a battery, according to the claim 33, further comprising a step for winding the first electrode assembly and the second electrode assembly which coupled to each other.
